(19) Europäisches Patentamt

European Patent Office

Office européen des brevets

(11) **EP 1 457 782 A1**

(12) **EUROPEAN PATENT APPLICATION**
published in accordance with Art. 158(3) EPC

(43) Date of publication:
**15.09.2004 Bulletin 2004/38**

(51) Int Cl.⁷: **G01N 33/53**, G01N 37/00, G01N 21/64

(21) Application number: **02781822.8**

(22) Date of filing: **21.11.2002**

(86) International application number:
**PCT/JP2002/012157**

(87) International publication number:
**WO 2003/044527 (30.05.2003 Gazette 2003/22)**

(84) Designated Contracting States:
**AT BE BG CH CY CZ DE DK EE ES FI FR GB GR IE IT LI LU MC NL PT SE SK TR**

(30) Priority: **22.11.2001 JP 2001358446**
**22.11.2001 JP 2001358581**

(71) Applicant: **Riken**
**Wako-shi, Saitama 351-0198 (JP)**

(72) Inventors:
• **TASHIRO, Hideo**
  **Wako-shi, Saitama 351-0198 (JP)**

• **KONDOH, Yasumitsu**
  **Wako-shi, Saitama 351-0198 (JP)**
• **KITSUNAI, Tokuji**
  **Wako-shi, Saitama 351-0198 (JP)**
• **HONDA, Kaori**
  **Wako-shi, Saitama 351-0198 (JP)**

(74) Representative: **Gervasi, Gemma, Dr.**
**Studio Brevetti e Marchi**
**NOTARBARTOLO & GERVASI S.r.l.,**
**Corso di Porta Vittoria, 9**
**20122 Milano (IT)**

(54) **SUBSTRATE FOR BIOMOLECULE MICROARRAY, PROCESS FOR PRODUCING THE SAME, BIOMOLECULE MICROARRAY AND METHOD OF COLLECTING DATA ON BIOMOLECULE MICROARRAY**

(57)    A biomolecular microarray substrate having a spot for fixing a biomolecular probe on a surface thereof. The spot of light-reflecting layer is present between the biomolecular probe-fixing spot and the substrate surface. A method of manufacturing the biomolecular microarray substrate. A biomolecular microarray having a biomolecular probe-fixing spot in which a biomolecular probe is fixed by a biomolecular probe-fixing spot having the biomolecular microarray substrate. A data collection method for biomolecular arrays. Fluorescently labeled target biomolecules is interacted with a biomolecular microarray having, on a substrate surface, biomolecular probe-fixing spots that fix biomolecular probes on light-reflecting layer spots; excitation light is directed onto the biomolecular microarray obtained and reflected light and fluorescence are simultaneously measured from the biomolecular microarray; a biomolecular probe-fixing spot present on a light-reflecting layer spot is specified from differences in the intensity of the light reflecting off of the biomolecular microarray; and fluorescence data are obtained from within the scope of the specified spot. Alternatively, light is directed onto the biomolecular microarray obtained and reflected light is measured from the biomolecular microarray; a biomolecular probe-fixing spot having a light-reflecting layer spot is specified from differences in the intensity of the light reflecting off of the biomolecular microarray; excitation light is directed only onto the scope of the specified biomolecular probe-fixing spot and measuring the fluorescence; and fluorescence data are obtained from the scope of the specified spot.

Fig.1

# Description

## Technical Field

The present invention relates to a highly sensitive substrate for a biomolecular microarray lending itself to digital analysis and a method of manufacturing the same; a biomolecular microarray; and a data collection method for biomolecular microarrays.

## Background Art

DNA microarrays permitting the massive analysis of gene expression profiles analyze several thousand to several tens of thousands of genes per sheet. Conventional DNA microarrays are produced with a device that stamps DNA (a DNA arrayer), in which quill pins the tips of which have been removed are used to aspirate DNA and roughly 4 to 48 quill pins are simultaneously brought into contact with a glass slide to form DNA spots. The DNA spots thus produced vary in shape and area, thus negatively affecting reproducibility and determinability. Further, differences in the orientation of curvature of the individual quill pins and rotation of the quill pins during stamping cause misalignment of the DNA spots, resulting in distortion in the positioning of the DNA spots. The DNA microarrays thus produced are then employed in hybridization reactions with fluorescently labeled nucleic acid samples and an overall DNA microarray fluorescent image is produced with a fluorescent scanner employing a confocal fluorescent microscope.

Since the fluorescent intensity of each spot in the DNA microarray fluorescent image cannot be measured as is, a gridding operation is conducted with analytic software. In gridding, the number of rows and columns of spots in the array, the spacing between spots, and the diameter of the spots are inputted and the spots are encircled. When the positioning of the spots is off during gridding, they cannot be correctly encircled. Thus, an automatic position-correcting function is employed in the software. However, these operations are not all performed automatically. It is still necessary to manually set the spot starting point and visually confirm and correct the grid of spots. These operations are highly tedious, and when the number of DNA spots reaches several thousand or more, considerable time is required. This is one factor delaying the analysis of spots.

Accordingly, the present invention has as its first object to provide a substrate permitting automatic gridding; permitting the automatic collection of fluorescence data from biomolecular microarrays such as DNA microarrays without tedious human labor; and permitting digital analysis.

The second object of the present invention is to provide a data collection method for DNA microarrays permitting the automatic collection of fluorescence data from DNA microarrays without tedious human labor.

## Disclosure of the Invention

The present invention, achieving the above-stated objects, is as follows:

(1) A biomolecular microarray substrate having a spot for fixing a biomolecular probe on a surface thereof, wherein a spot of light-reflecting layer is present between the biomolecular probe-fixing spot and the substrate surface.

(2) The substrate according to (1) wherein multiple biomolecular probe-fixing spots are present.

(3) The substrate according to (1) or (2) wherein the light-reflecting layer spots have essentially the same planar shape as the biomolecular probe-fixing spots.

(4) The substrate according to any of (1) to (3) wherein the biomolecular probe-fixing spots are comprised of at least one biomolecular probe-fixing compound selected from among the group consisting of biotin; avidin; streptoavidin; poly-L-lysine; and compounds containing an amino group, aldehyde group, thiol group, carboxyl group, succinimide group, maleimide group, epoxide group, or isothiocyanate group.

(5) The substrate according to any of (1) to (4) wherein the biomolecular probe-fixing spots are round and have a diameter ranging from 10 to 500 micrometers, or are square with a lateral length ranging from 10 to 500 micrometers.

(6) The substrate according to any of (1) to (5) wherein said light-reflecting layer is a metal layer.

(7) The substrate according to any of (1) to (6) wherein the substrate is a glass substrate, silicon substrate, or silica substrate.

(8) The substrate according to any of (1) to (7) wherein a water-repellent layer is present on the substrate surface which is not covered by the biomolecular probe-fixing spots.

(9) A method of manufacturing the biomolecular microarray substrate according to any of (1) to (7), comprising the steps of:

providing a light-reflecting layer on a substrate surface;

providing a biomolecular probe-fixing layer on the light-reflecting layer;

providing a photoresist layer on the biomolecular probe-fixing layer;

exposing the photoresist layer through a spot-forming mask;

developing the photoresist layer;

etching the portion of the light-reflecting layer which is not protected by the photoresist layer to form spots of the biomolecular spot-fixing layer and the light-reflecting layer; and

removing the photoresist layer.

(10) The method of manufacturing according to (9) further comprising a step of water-resistant treatment of the substrate surface between the etching step and the photoresist removal step.

(11) The method of manufacturing according to (9) or (10) wherein the biomolecular probe-fixing layer is formed by fixing a biomolecular probe-fixing compound after treating the surface of the light-reflecting layer with aminosilane.

(12) The method of manufacturing according to (11) wherein the light-reflecting layer is an aluminum layer and the surface of the aluminum layer is oxidized with ethanol to form an aminosilane-treated light-reflecting layer.

(13) The method of manufacturing of any of (9) to (12) wherein the light-reflecting layer is formed by the vapor deposition of a metal.

(14) A biomolecular microarray having a biomolecular probe-fixing spot in which a biomolecular probe is fixed by a biomolecular probe-fixing spot having the biomolecular microarray substrate according to any of (1) to (8).

(15) The biomolecular microarray according to (14) wherein multiple biomolecular probe-fixing spots are present.

(16) The biomolecular microarray according to (14) or (15) wherein the biomolecular probe that is fixed is DNA, cDNA, RNA, or PNA.

(17) The biomolecular microarray according to (16) wherein said fixed biomolecular probes have identical or different base sequences in individual biomolecular probe-fixing spots.

(18) The biomolecular microarray according to (14) or (15) wherein the biomolecular probe that is fixed is a protein or a peptide.

(19) The biomolecular microarray according to (18) wherein said fixed biomolecular probes have identical or different base sequences in individual biomolecular probe-fixing spots.

(20) A data collection method for biomolecular arrays (referred to hereinafter as "data collection method 1") comprising:

> interacting fluorescently labeled target biomolecules with a biomolecular microarray having, on a substrate surface, biomolecular probe-fixing spots that fix biomolecular probes on light-reflecting layer spots;
> directing excitation light onto the biomolecular microarray obtained and simultaneously measuring reflected light and fluorescence from the biomolecular microarray;
> specifying a biomolecular probe-fixing spot present on a light-reflecting layer spot from differences in the intensity of the light reflecting off of the biomolecular microarray; and
> obtaining fluorescence data from within the scope of the specified spot.

(21) The method according to (20) wherein said biomolecular microarray has multiple biomolecular probe-fixing spots.

(22) A data collection method for biomolecular arrays (referred to hereinafter as "data collection method 2") comprising:

> interacting fluorescently labeled target biomolecules with a biomolecular microarray having, on a substrate surface, biomolecular probe-fixing spots that fix biomolecular probes on light-reflecting layer spots;
> directing light onto the biomolecular microarray obtained and measuring reflected light from the biomolecular microarray;
> specifying a biomolecular probe-fixing spot having a light-reflecting layer spot from differences in the intensity of the light reflecting off of the biomolecular microarray;
> directing excitation light only onto the scope of the specified biomolecular probe-fixing spot and measuring the fluorescence; and
> obtaining fluorescence data from the scope of the specified spot.

(23) The method according to (22) wherein the biomolecular microarray has multiple biomolecular probe-fixing spots.

(24) The method according to any of (20) to (23) wherein the scope of the specified spot is detected by the difference in reflectance between a light-reflecting layer spot on the biomolecular microarray and the remainder of the surface of the biomolecular microarray.

(25) The method according to any of (20) to (24) wherein the light-reflecting layer spots have essentially the same planar shape as the biomolecular probe-fixing spots.

(26) The method according to any of (20) to (25) wherein the light or excitation light directed onto the biomolecular probe-fixing spots is a laser beam.

(27) The method according to any of (20) to (26) wherein the target biomolecule is DNA, RNA, cDNA, mRNA, or a protein.

(28) The method of any of (20) to (27) wherein the fluorescence data from just the scope of the specified spot is obtained as the integrated value, average value, or median value within the scopes of spots of fluorescent intensity.

(29) The method according to (28) wherein the fluorescence data from just the scope of the specified spot is obtained for individual wavelengths of fluorescence as the integrated value, average value, or median value within the scopes of spots of fluorescent intensity.

(30) The method according to any of (20) to (29) wherein fluorescence data is collected sequentially for each spot on the biomolecular microarray.

(31) The method according to any of (20) to (30) wherein the scopes of multiple spots on the biomolecular microarray are specified, the fluorescence emitted by each spot, the scope of which has been specified, is sequentially measured, and using the data of the scopes of spots that have been specified in advance, fluorescence data from just the scopes of those spots is continuously collected.

(32) The method according to (31) wherein the biomolecular probe-fixing spots of some portion of the biomolecular microarray are specified, the positions of all of the biomolecular probe-fixing spots are computed from the positions of the specified portion of spots, and the scopes of the spots are specified.

(33) The method according to (31) wherein the scopes of all spots on the biomolecular microarray are specified in advance.

**Brief Description of the Figures**

Fig. 1 shows the results obtained in Embodiment 3. These are the results obtained in Test Example 1.
Fig. 2 shows the results obtained in Embodiment 4.
Fig. 3 is a schematic of a scanner reading the fluorescence of a microarray.
Fig. 4 is a descriptive diagram of the method of analyzing a scanned image (digital array scanning method 1).
Fig. 5 is a descriptive diagram of the method of analyzing a scanned image (digital array scanning method 2).
Fig. 6 is a descriptive diagram of the method of analyzing a scanned image (digital array scanning method 2).

**Best Mode of Implementing the Invention**

**[Biomolecular microarrays]**

The first aspect of the present invention is a biomolecular microarray substrate having biomolecular probe-fixing spots. The biomolecular microarray substrate desirably has multiple biomolecule-fixing spots.
The substrate portion of the biomolecular microarray substrate may be, for example, a glass substrate, silicon substrate, or silica glass substrate.
The biomolecular probe-fixing spots are formed by fixing a prescribed quantity of at least one biomolecular probe-fixing compound selected from among the group consisting of biotin; avidin; streptoavidin; poly-L-lysine; and compounds containing an amino group, aldehyde group, thiol group, carboxyl group, succinimide group, maleimide group, epoxide group, or isothiocyanate group.
The following compounds are examples of biomolecular probe-fixing compounds. These compounds are given merely by way of example, and not by way of limitation.
Compounds having amino groups:

    3-Aminopropyltrimethoxysilane
    N-(2-Aminoethyl)-3-aminopropyltrimethoxysilane (EDA)
    Trimethoxysilylpropyldiethylenetriamine (DETA)
    3-(2-Amionethylaminopropyl)trimethoxysilane

Compound having aldehyde groups:

    Glutaraldehyde

Compound having thiol groups:

    4-Mercaptopropyltrimethoxysilane (MPTS)

Compound having epoxy groups:

    3-Glycidoxypropyltrimethoxysilane

Compound having isothiocyanate groups:

    4-Phenylene diisothiocyanate (PDITC)

Compounds having succinimide and maleimide groups:

    Disuccinimidyl carbonate (DSC)
    Succinimidyl 4-(maleimidophenyl)butyrate (SMPB)
    m-Maleimidobenzoyl-N-hydroxysuccinimidoester (MBS)
    Succinimidyl 4-(N-maleimidomethyl)cyclohexane-1-carboxylate (SMCC)
    m-Maleimidopropionic acid-N-hydroxysuccinimido ester (MPS)

The quantity of biomolecular probe-fixing compound fixed on the biomolecular probe-fixing spots can be suitably determined based on the compound.
Although the shape of the biomolecular probe-fixing spots is not specifically limited, the spots may be round, for example. The diameter thereof may fall within a range of from 10 to 500 micrometers, for example. The shape of the biomolecular probe-fixing spots may also be square or polygonal. The length of a single side of the square or polygon may fall within the range of from 10 to 500 micrometers, for example.
On the substrate of the present invention, a light-reflecting layer is present between the biomolecular probe-fixing spots and the substrate surface. The light-reflecting layer desirably has essentially the same shape as the biomolecular probe-fixing spots positioned on it. Thus, an advantage is afforded in that the spots of the light-reflecting layer may be detected to automatically determine the position and area of the biomolecular spots.
The substance constituting the light-reflecting layer is not specifically limited other than that it possesses light-reflecting properties. For example, the light-reflecting layer may be in the form of a metal layer. Examples are metal layers of aluminum, gold, silver, platinum, and nickel. Alternatively, the light-reflecting layer may be in the form of a monolayer of an oxide or the like or in the form of multiple reflective layers.

In the biomolecular microarray substrate of the present invention, a water-repellent layer may be present on the substrate surface without covering the biomolecular probe-fixing spots. Treating the substrate surface to render it water repellent without covering the biomolecular probe-fixing spots permits the more accurate fixing of biomolecular probe to biomolecular probe-fixing spots. The water-repellent layer may consist of existing water-repellent agents. Examples of water-repellent agents that are suitable for use are silicon coatings, fluorine coatings, nylon coatings, and Teflon coatings.

The biomolecular probe fixed to the biomolecular microarray substrate of the present invention may be, for example, oligo-DNA or cDNA. The biomolecular microarray substrate of the present invention covers DNA microarray substrates.

The above biomolecular microarray substrate of the present invention may be manufactured by the method of manufacturing of the present invention comprising the steps of:

> providing a light-reflecting layer on a substrate surface;
> providing a biomolecular probe-fixing layer on the light-reflecting layer;
> providing a photoresist layer on the biomolecular probe-fixing layer;
> exposing the photoresist layer through a spot-forming mask;
> developing the photoresist layer;
> etching the portion of the light-reflecting layer not protected by the photoresist layer to form spots of the biomolecular spot-fixing layer and the light-reflecting layer; and
> removing the photoresist layer.

The step of providing a light-reflecting layer on the substrate surface may be conducted for example by vapor depositing a metal on the substrate surface. Known metal vapor deposition methods and conditions may be employed without modification. Prior to vapor depositing a metal on the substrate surface, the substrate surface is desirably washed.

Next, a biomolecular probe-fixing layer is formed on the light-reflecting layer. When the light-reflecting layer is an aluminum layer, prior to forming the biomolecular probe-fixing layer, the surface of the aluminum layer can be oxidized with ethanol and then aminosilane treated with an aminosilane compound. Aminosilane treatment of the light-reflecting layer permits not physical adsorption but chemical fixation of biomolecules such as DNA, thus affording the advantage of reducing the loss of biomolecules such as DNA during subsequent operations.

The step of providing a biomolecular probe-fixing layer on the light-reflecting layer can be conducted by fixing a biomolecular probe-fixing compound to the light-reflecting layer. The biomolecular probe-fixing compound may be suitably selected from among the examples of substances given above for the substrate of the present invention. When the biomolecular probe-fixing compound is biotin, it can be fixed for example by reacting a biotin succinimide ester with a light-reflecting layer surface that has been treated with aminosilane. When the biomolecular probe-fixing compound is a compound having an aldehyde group in the form of glutaraldehyde, it can be fixed by reacting glutaraldehyde with a light-reflecting layer surface that has been treated with aminosilane.

The step of providing a photoresist layer on the biomolecular probe-fixing layer can be conducted, for example, by the usual methods with existing resists. For example, the biomolecular probe-fixing layer surface can be coated by spin coating and the resist then thermally cured. The type of resist, coating method, and curing conditions are not specifically limited; however, for example, a positive resist can be applied to a thickness of about 1 micrometer by spin coating and baked in an oven to thermally cure the resist.

The step of exposing the photoresist layer through a spot-forming mask is conducted, depending on whether the resist is a positive or negative resist, by preparing a mask forming biomolecular probe-fixing spots of desired dimensions, shape, and spacing, and exposing the photoresist layer through this mask. The exposure conditions may be suitably determined based on the type of photoresist.

The step of developing the photoresist layer is conducted by processing the exposed photoresist layer with a developer and washing it as needed. The developer may be suitably selected based on the resist employed.

After developing, portions of the light-reflecting layer that are not protected by the photoresist layer are etched away. This step is conducted by suitably selecting an etching solution capable of etching the light-reflecting layer. For example, when the light-reflecting layer is a metal layer, the etching solution may be an aqueous acid solution. The type and concentration of the acid contained in the aqueous acid solution may be suitably determined in consideration of the type of metal and thickness of the layer being etched.

After etching, the photoresist layer is removed. This step can be conducted by, for example, using an organic solvent capable of dissolving the photoresist, such as acetone. After removing the photoresist layer, washing may be conducted as needed to obtain the biomolecular microarray substrate of the present invention.

In the method of manufacturing of the present invention, a step of treating the surface of the substrate to render it water repellent may be included between the etching step and the step of removing the photoresist. Conducting a water-repellent treatment at that stage permits the formation of a water-repellent layer on the substrate surface without covering the biomolecular probe-fixing spots. The water-repellent treatment can be suitably conducted based on the type of water-repellent agent. For example, the substrate can be immersed in the water-repellent agent.

The present invention covers biomolecular microarrays. The biomolecular microarray of the present invention is a biomolecular microarray in which biomolecular probe is fixed to biomolecular probe-fixing spots on the above-described biomolecular microarray substrate of the present invention.

Biomolecular probe-fixing spots are provided on the substrate. Multiple biomolecular probe-fixing spots are desirably provided. The number of biomolecular probe-fixing spots is not specifically limited, and is suitably determined based on the size of the substrate, size of the spots, spacing of the spots, and the like.

The biomolecular probe that is fixed may be oligo-DNA or cDNA, for example. That is, the biomolecular microarray of the present invention covers DNA microarrays. In that case, individual biomolecular probe-fixing spots may fix biomolecular probe of identical or different base sequences.

The biomolecular probe that is fixed may be a protein or peptide, for example. In that case, individual biomolecular probe-fixing spots may fix biomolecular probe of identical or different base sequences.

Still further, the biomolecular probe that is fixed may be oligo-DNA or cDNA, for example. That is, the biomolecular microarray of the present invention covers DNA microarrays.

To fix the biomolecular probe to the biomolecular probe-fixing spots, a substance or functional group having the property of binding the biomolecular probe-fixing compound forming the biomolecular probe-fixing spots is fixed in advance to the biomolecular probe, and, for example, a solution containing this biomolecular probe is applied dropwise to the biomolecular probe-fixing spots of the biomolecular microarray substrate of the present invention.

Examples of substances having such a binding property are avidin, streptoavidin, and biotin. Examples of functional groups having such a binding property are carboxyl groups, amino groups, aldehyde groups, thiol groups, succinimide and maleimide groups.

**[Data Collection Method]**

Data collection method 1 of the present invention comprises the four steps of:

(1) interacting fluorescently labeled target biomolecules with a biomolecular microarray having, on a substrate surface, biomolecular probe-fixing spots that fix biomolecular probes on light-reflecting layer spots;
(2) directing excitation light onto the biomolecular microarray obtained and simultaneously measuring reflected light and fluorescence from the biomolecular microarray;
(3) specifying a biomolecular probe-fixing spot having a light-reflecting layer spot from differences in the intensity of the light reflecting off of the biomolecular microarray; and
(4) obtaining fluorescence data from within the scope of the specified spot.

Data collection method 2 of the present invention comprises the five steps of:

(1) interacting fluorescently labeled target biomolecules with a biomolecular microarray having, on a substrate surface, biomolecular probe-fixing spots that fix biomolecular probes on light-reflecting layer spots;
(2) directing light onto the biomolecular microarray obtained and measuring the light reflecting off the biomolecular microarray;
(3) specifying a biomolecular probe-fixing spot having a light-reflecting layer spot from differences in the intensity of the light reflecting off the biomolecular microarray;
(4) directing excitation light onto only the scope of the specified biomolecular probe-fixing spot and measuring the fluorescence; and
(5) obtaining fluorescence data from the scope of the specified spot.

The interaction step

In this step, fluorescently labeled target biomolecules are interacted with the biomolecular microarray. The target biomolecules may be, for example, DNA, RNA, cDNA, mRNA, or protein. The fluorescent labeling of the target biomolecule may be conducted by known methods.

The interaction of the biomolecular probe fixed in spots to the biomolecular microarray with the target biomolecules may be conducted by known methods and under known conditions. For example, the interaction of DNA probe with target cDNA (hybridization) may be conducted by the following method Fluorescently labeled target cDNA is mixed with a hybridization solution and the cDNA is thermally denatured by heat treatment. Next, the solution is applied to the microarray, a glass cover is put in place, the assembly is placed in a tightly sealed moisture box so that the solution does not dry out, and a hybridization reaction is conducted at a temperature conforming to the target cDNA and DNA probe. Following hybridization, the microarray is washed with a solution of regulated salt concentration and temperature to remove unreacted target cDNA.

### The reflected light measuring step

In this step, light is directed onto the biomolecular microarray that has been subjected to interaction with fluorescently labeled target biomolecules and the light reflecting off the biomolecular microarray is measured.

The light that is directed onto the biomolecular microarray may be, for example, a laser beam. Examples of laser beams are gas lasers, fixed lasers, and semiconductor lasers. The wavelength and output of the laser beam may be suitably selected based on the fluorescent label employed In addition to a laser beam, a light source in the form of a xenon lamp, mercury lamp, halogen lamp, metal halide lamp, or the like may be employed.

The light reflecting off the biomolecular microarray may be measured with light-receiving elements. Examples of light-receiving elements suitable for use are photomultipliers, photodiodes, and CCD elements.

The use of excitation light suited to the fluorescent label as the light employed in the measurement of reflected light permits the simultaneous measurement of reflected light and fluorescence. In that case, the reflected light and the fluorescence must be separated with a dichroic mirror or the like and light-receiving elements measuring fluorescence and light-receiving elements measuring excitation light must be separately provided. Photomultipliers, CCD elements, and the like may be employed as light-receiving elements measuring fluorescence.

### The step of specifying the spot scope

In this step, the scope of a biomolecular probe-fixing spot having a light-reflecting layer spot is specified based on the intensity data of light reflecting off the biomolecular microarray being measured.

The biomolecular microarray employed in the method of the present invention has biomolecular probe-fixing spots positioned on light-reflecting layer spots on a substrate surface. The biomolecular microarray desirably has multiple biomolecule-fixing spots. Specifying the scope of a light-reflecting layer spot permits specification of the scope of a biomolecular probe-fixing spot. In particular, when the light-reflecting layer spots are of essentially the same planar shape as the biomolecular probe-fixing spots, it is possible to more accurately specify the scope of the biomolecular probe-fixing spots.

The light-reflecting layer spots have a higher reflectance than the surrounding substrate surface. Thus, the intensity of light reflecting off the light-reflecting layer spots is greater than that of light reflecting off other portions of the substrate surface, and a nearly constant value is obtained from individual light-reflecting layer spots. Thus, the threshold of the intensity of light reflecting off the biomolecular microarray can be set to specify light-reflecting layer spots.

### The fluorescence measuring step

When fluorescence is simultaneously measured in the reflected-light measurement step, this step is unneeded. This step is necessary only when measuring just the fluorescence of biomolecular probe-fixing spots after having specified the scope of the spots in the reflected-light measurement step and the spot scope specifying step.

Excitation light is directed onto only a biomolecular probe-fixing spot the scope of which has been specified, and the fluorescence generated by the fluorescent labels present at that spot is measured. The fluorescence of that spot can be measured with a light-receiving element. Examples of such light-receiving elements that are suitable for use are photomultipliers and CCD elements.

### The step of obtaining fluorescence data

In this step, fluorescence data is obtained for the scope of the spot specified in the step of specifying the spot scope from the fluorescence data obtained in the above fluorescence measuring step. In this step, the fluorescence of fluorescently labeled target biomolecules that have adhered to the substrate surface other than on biomolecular probe-fixing spots is excluded. Accordingly, data can be obtained on just the fluorescence of fluorescently labeled target biomolecules that have interacted with biomolecular probe-fixing spots on light-reflecting layer spots.

### Embodiments

The present invention is described in greater detail below through embodiments.

Embodiment 1

Method of preparing the substrate

1. Cleaning the glass slides

Twenty glass slides free of scratches were selected, placed on a slide rack, washed for 30 minutes in 200 mL of acetone with sonication, and rinsed with ultrapure water (500 mL x 2, 200 mL x 1). Hydrogen peroxide and sulfuric acid (1:1, 200 mL) were mixed in an ice bath. The glass slides were immersed therein, washed with sonication for 30 minutes, and rinsed with ultrapure water (500 mL x 3). Washing with sonication for 30 minutes was then conducted in 200 mL of ultrapure water. After thoroughly rinsing each slide rack with ultrapure water (a water stream), the racks were washed by immersion in 500 mL of pure water. Each rack of washed glass slides was covered with aluminum foil and dried for 15 minutes in an oven at 200°C, cooled to room temperature in a desiccator wrapped in aluminum foil, and maintained in that state until use.

2. Vapor deposition of aluminum

Tungsten board that had been wiped with acetone was placed in a vacuum vapor deposition device. Aluminum wire (1.0 mm in diameter, 99.999%) 1 cm in length that had been wiped with acetone and a cleaned glass slide were placed thereupon, the pressure was reduced to $4.0 \times 10^{-3}$ Pa, and aluminum was vapor deposited at a rate of 10 nm/s to a film thickness of 300 to 500 nm.

3. Ethanol processing of the aluminum surface

About 70 mL of a 70 percent ethanol solution prepared by thoroughly mixing ultrapure water and ethanol for 5 minutes with sonication was added to a Koplin jar to which five glass slides that had been vapor deposited with aluminum had been charged. Processing with sonication was conducted for 30 minutes. The ethanol-processed glass slides were rinsed one at a time with ultrapure water (500 mL x 3) and placed on a slide rack. Each rack was then rinsed with ultrapure water (500 mL).

4. Aminosilane processing

To 196 mL of ultrapure water was added 4 mL of 3-(2-aminoethylaminopropyl)trimethoxysilane and the mixture was stirred for 30 minutes in a dark room. Individual racks of glass slides that had been processed with ethanol were immersed therein and reacted for 10 minutes in the dark room. After a light rinsing with ultrapure water (200 mL x 2), each slide rack was placed in a 110°C oven, covered with aluminum foil, heated for 45 minutes, and cooled to room temperature in a desiccator wrapped in aluminum foil.

5. Biotin treatment

Biotin (Long Arm) NHS-Water Soluble (Vector Laboratories) was dissolved in a 50 mM $Na_2CO_3$—$NaHCO_3$ (pH 8.7) buffer to a concentration of 1 mg/mL to prepare a biotin-treated buffer. Five sheets of the aminosilane-treated glass slides were arranged in a square Petri dish, 25 mL of biotin-treated buffer was added, a cover was applied, and gentle mixing was conducted overnight in a mixer. Subsequently, the glass slides were washed with ultrapure water (500 mL x 3) and dried for 45 minutes in a 60°C oven.

6. Patterning

The biotin-treated glass slides were coated (300 rpm, 3 s; slope, 5 s; 3,000 rpm, 10 s) with positive resist (Shipley Far East K.K., MP S 1813) with a spin coater to a thickness of 1 micrometer and dried for 45 minutes in a 60°C oven. Next, the resist-coated glass slides were exposed to ultraviolet radiation through a mask forming a DNA probe-fixing spot pattern. A prototype device capable of exposure by scanning the third harmonic (wavelength: 355 nm, laser power: 80 mW) of a YAG laser was employed in the exposure operation. An experimentally determined suitable scanning time of 120 s (for a 30 x 80 mm area) was adopted. The glass slides were immersed in developer (Shipley Far East K. K., MFCD-26), developed for 45 s with intense vibration, and rinsed with ultrapure water (500 mL x 2). They were then immersed in etching solution (phosphoric acid:acetic acid:nitric acid:ultrapure water = 16:2:1:1, 200 mL) and processed for 3 minutes with ultrasound. The etched glass slides were thoroughly rinsed with ultrapure water (500 mL x 5). This operation left just the aluminum layer beneath the resist and the DNA probe-fixing spots on the glass slides.

7. Silicon coating (water-repellency treatment)

A 5 mL quantity of a silicon coating reagent (Iwaki Glass K.K., SIL-COAT 5) was added to 195 mL of ultrapure water heated to 70°C and the mixture was stirred for 10 minutes. The etched glass slides were immersed for 10 s and thoroughly rinsed with ultrapure water (500 mL x 3). Each rack of glass slides was covered with aluminum foil and baked for 30 minutes at 110°C, cooled to room temperature in a desiccator wrapped in aluminum foil, and maintained in that state until use.

8. Dissolution of the resist

The etched and silicon-coated glass slides were individually washed with acetone (70 mL x 3) to dissolve the resist remaining on the spots. Following thorough rinsing in ultrapure water (500 mL x 2), they were washed in 70 mL of ultrapure water while being treated with sonication for 30 min, and then rinsed again with 70 mL of ultrapure water.

Embodiment 2

Preparation of the biomolecular microarray

A 0.05 mg/mL of streptoavidin solution (Vector Corp., solution buffer: 1xPBS; 137 mM NaCl, 8.10 mM $Na_2HPO_4$, 2.68 mM KCl, 1.47 mM $KH_2PO_4$, pH 7.4) was applied to the entire surface of the substrate prepared in Embodiment 1, and the substrate was left standing for 30 minutes at room temperature. The substrate was then washed three times for 10 minutes with 1xPBS to remove the unreacted streptoavidin. After rinsing with ultrapure water the substrate to which the streptoavidin had bound, the water was removed with a centrifugal separator and the substrate was dried. There was streptoavidin bound to the DNA-fixing spots of this substrate.

Next, to fix biotin-treated oligonucleotide DNA to the substrate, the substrate was precision stamped with a biotin-treated oligonucleotide DNA solution at DNA probe-fixing spots with a spot-stamping device. Following stamping, the substrate was washed with 1xSSPE buffer (150 mM NaCl, 8.65 mM NaH$_2$PO$_4$, 1.25 mM EDTA; pH 7.4) to remove unreacted DNA, thus completing a DNA microarray.

Embodiment 3

A comparison of detection sensitivity

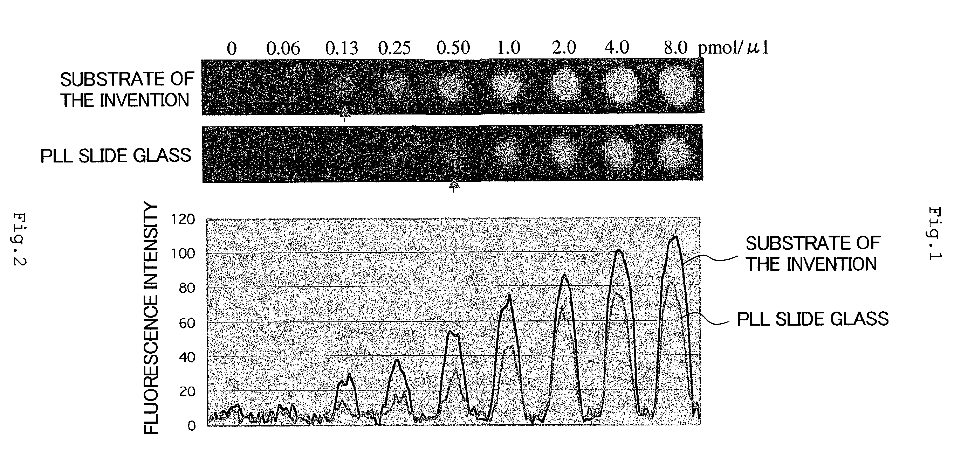

The biomolecular microarray substrate obtained in Embodiment 1 (DNA microarray substrate) and a glass substrate coated with poly-L-lysine (PLL glass slide) for commercial DNA microarrays were spotted in the same manner as in Embodiment 2 with a Cy3-oligo-DNA dilution series (0, 0.06, 0.13, 0.25, 0.50, 1.0, 2.0, 4.0, and 8.0 pmol/microliter) and the fluorescent intensity of each spot was measured by the following method without washing. The results obtained are given in Fig. 1. As revealed by Fig. 1, clear fluorescent signals were measured for the DNA microarray substrate obtained in Embodiment 1 from 0.13 pmol/microliter spots on, while clear fluorescent signals were measured for the commercial DNA microarray substrate without light-reflecting layer from 0.50 pmol/microliter on. That is, the DNA microarray substrate of the present invention was capable of a sensitivity of roughly fourfold that of the DNA microarray substrate without light-reflecting layer.

The following method was employed in the above measurement of fluorescent spots.

A fluorescent microarray scanner (Nippon Laser Electronics Co.) was employed to obtain fluorescent images of the two substrates. In this process, the applied voltage of the detector (photomultiplier) of the scanner was made identical in the measurement of the two substrates. The intensity of fluorescent spots was graphed using image analysis software (NIH Image).

Embodiment 4

Specifying of biomolecular probe-fixing spots

The DNA microarray biomolecular probe-fixing spots obtained in Embodiment 1 were specified by the following method.

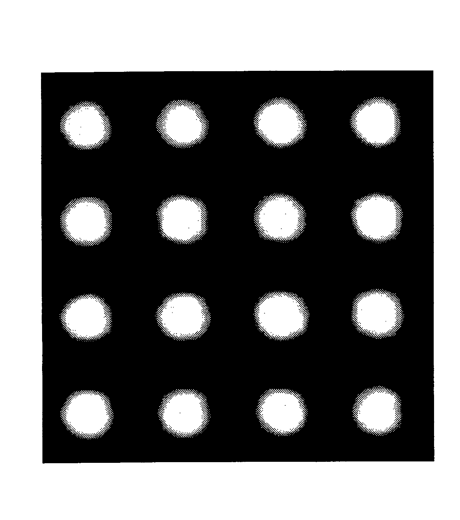

The optical cut filter positioned on the entering light side of the detector (photomultiplier) of a fluorescent microarray scanner (Nippon Laser Electronics Co.) was disconnected so that the laser beam reflecting off the surface of the DNA microarray would directly enter the photomultiplier. In this process, the voltage applied to the photomultiplier was usually set lower than when measuring fluorescent light. The results of measurement of light reflecting off the surface of the DNA microarray obtained in Embodiment 1 obtained by this method are given in Fig. 2. The greater the intensity of light entering the detector, the whiter the display. Based on these results, the biomolecular probe-fixing spots present on light-reflecting layer spots were found to produce a greater intensity of reflected laser beam light than the uncovered substrate surface. This characteristic was exploited to specify biomolecular probe-fixing spots.

Embodiment 5

Digital array scanning method 1

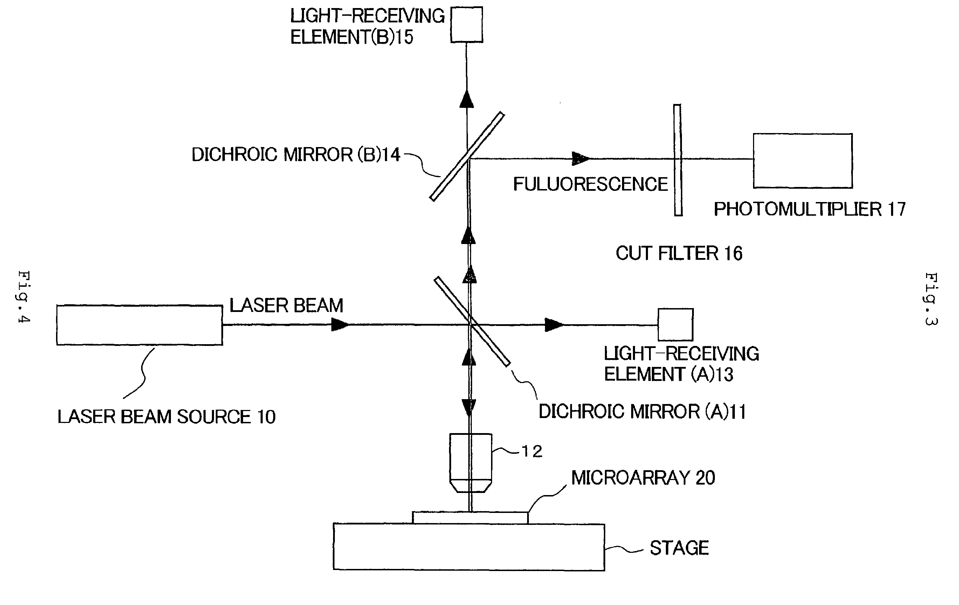

Scanners that read microarray fluorescence are comprised briefly of a laser beam source, a dichroic mirror, a cut filter, and a photomultiplier (Fig. 3). Most of the laser beam that is generated by laser beam source 10 is reflected by dichroic mirror (A) 11, passes through object lens 12, and is directed onto a microregion on microarray 20. However, a portion of the laser beam also passes through dichroic mirror (A) 11, and the optical intensity of that beam is measured by light-receiving element (A) 13 (photodiode, photomultiplier, or the like) and used as a correction value for laser beam reflectance. The reflecting laser beam and the fluorescence generated by microarray 20 on the stage are converged by object lens 12, and the laser beam passing through dichroic mirror (B) 14 is measured by light-receiving element (B) 15. The fluorescence is reflected by dichroic mirror (B) 14, passes through cut filter 16, and is measured by photomultiplier 17.

The microreflectance of the array is denoted by the following equation.

$$Rf=kP_B/P_A$$

(Rf: microreflectance of the array, P$_A$: output of the laser beam by the laser beam source that is picked up by light-receiving element (A), P$_B$: output of the reflected light of the laser beam off of the array that is picked up by light-receiving element (B), k: coefficients based on the reflectance of the filter, mirror, and the like)

Since a fluorescence measurement laser beam is employed in such reflectance measurement, the measurement can be conducted simply by mounting light-receiving element (A) and light-receiving element (B) on an existing scanner. Further, since fluorescence measurement is conducted simultaneously with reflectance measurement, reflectance measurement can be conducted without increasing the fluorescence measurement time. Still further, fluorescence data and reflectance data are present in a single set of pixel coordinates, with no shift in fluorescence data and reflectance data positions. The use of light-receiving element (A) and light-receiving element (B) corrects for errors in laser light source power fluctuation. However, when laser light source power fluctuation is not great and can be ignored, it is possible to omit light-receiving element (A).

Using two fluorescent pigments (for example, Cy3 and Cy5), two elements of fluorescence data exist for a single set of pixel coordinates when making a relative comparison of a single microarray. In such cases, digital array scanning is possible. As when two laser light sources are employed, it suffices to make measurements based on one of the reflectances of the laser light source. In that case, one set of reflectance data and two sets of fluorescence data exist for a single set of pixel coordinates. The present invention does not limit the size of a single pixel, but when the biomolecular probe-fixing spot is in the shape of a circle 50 to 500 micrometers in diameter, the size of a single pixel is desirably from 5 to 10 micrometers.

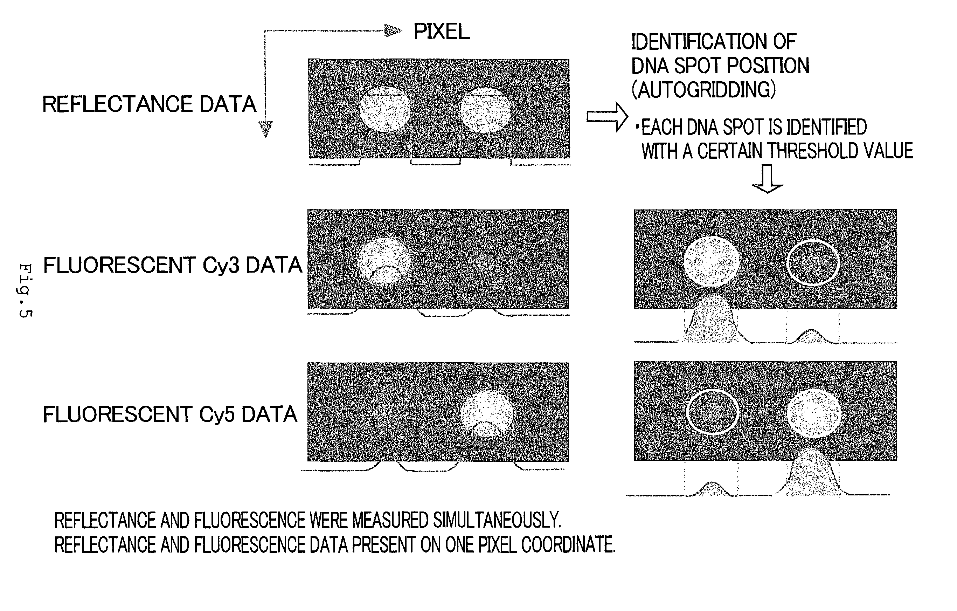

The use of two fluorescent pigments (Cy3 and Cy5) in the analysis method will be described based on Fig. 4.

In the course of analyzing a scanned image, it is necessary to identify biomolecular probe-fixing spots. The identification of biomolecular probe-fixing spots is conducted based on differences in reflectance (the uppermost portion of Fig. 4). In contrast to fluorescence intensity data, since a nearly constant value is obtained for all biomolecular probe-fixing spots in reflectance data, it is possible to identify biomolecular probe-fixing spots by setting a certain threshold value. The fluorescent intensity of each spot can be obtained by calculating the integrated value, average value, or median value of the fluorescence data within that grid (second and third parts of Fig. 4). Since the relative positioning of individual biomolecular probe-fixing spots is constant, the various positions can be distinguished by means of sequential numbers. In this method, automatic identification is possible without having to set the size, shape, or number of biomolecular probe-fixing spots.

Embodiment 6

Digital array scanning method 2

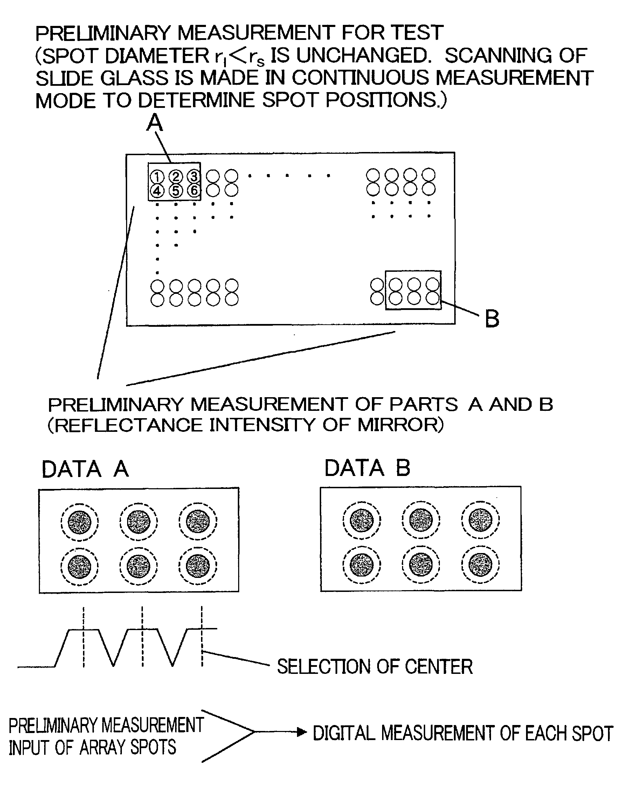

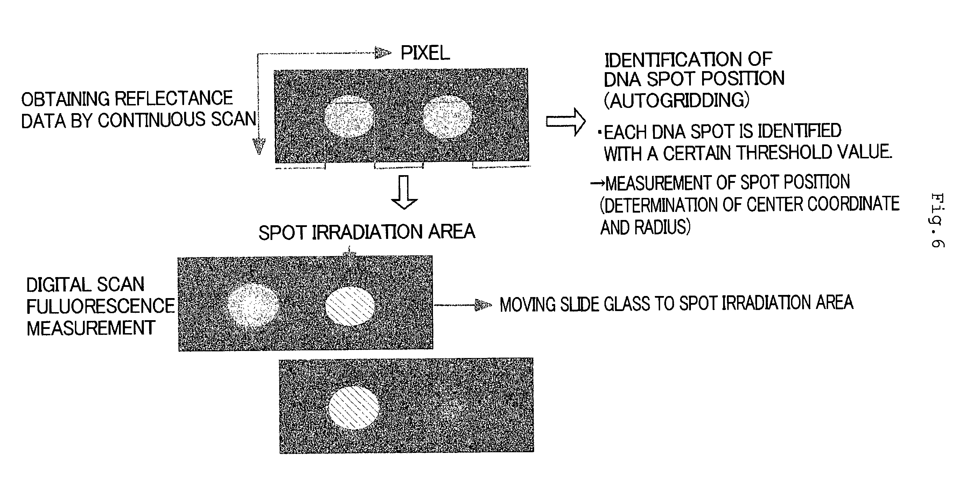

The present method renders above-described digital array scanning method 1 even faster. In this method, the fluorescence of the entire area of the array is not scanned and measured to obtain a fluorescence image, but the fluorescence of only one biomolecular probe-fixing spot on the array is measured. This will be described based on Figs. 5 and 6.

To specify the position of a biomolecular probe-fixing spot, the biomolecular microarray is continuously displaced within areas A and B of the biomolecular microarray. Light is directed onto each of these areas and the reflectance is measured (Fig. 5). Areas A and B are used to determine the slope and position of the array. Although they are desirably positioned on a diagonal, this is not a limitation. Nor is the width of these areas limited. Since a nearly constant value is obtained for the reflectance in all of the biomolecular probe-fixing spots in areas A and B, a fixed threshold can be set and biomolecular probe-fixing spots alone can be identified (upper portion of Fig. 6). The respective centers and the positioning of the entire array of spots are calculated from the areas of the biomolecular probe-fixing spots that have been identified. In this process, data necessary to compute the array of spots, such as the size of biomolecular probe-fixing spots, the number of rows, the number of columns, and the number of blocks, is inputted.

Based on a spot array calculated based on preliminary measurements, the biomolecular microarray is rapidly moved to spot points and each spot is measured as a single point at a laser convergence diameter that is smaller than or roughly identical in size to the biomolecular probe-fixing spots (parts 2 and 3 of Fig. 6). In this process, to displace the biomolecular microarray, the stage may be displaced or the laser beam may be optically displaced. The fluorescence emitted by the biomolecular probe-fixing spots due to irradiation by the laser beam is measured as the fluorescent intensity of the biomolecular probe-fixing spots. The array is rapidly moved to measure the next spot. In the present method, the fluorescent intensity of a biomolecular probe-fixing spot is digitally measured as a single point. Thus, in the analysis stage, it is unnecessary to identify a spot and convert it to data; it is digitized as it is being measured. Further, since it is unnecessary to measure the fluorescence of the entire area of the substrate surface, even faster measurement and analysis are possible.

**Industrial Applicability**

The present invention sets constant shape, area, and positioning of the biomolecular spots in a biomolecular microarray and provides a light-reflecting layer as an underlayer for the biomolecular spots, thereby achieving high sensitivity. By detecting the light-reflecting layer having essentially the same planar shape as the biomolecular spots, the present invention permits the automatic identification of the positioning and area of the biomolecular spots. This permits the digital analysis of the fluorescent intensity of the biomolecular spots, greatly reducing the amount of human analysis and shortening the time required for analysis. Since the positioning and area of the biomolecular spots are identified, just the fluorescent intensity of the biomolecular spots is measured, the fluorescent intensity of unnecessary portions (areas other than the biomolecular spots on the microarray) is not measured, and the detection time is further shortened.

The present invention further provides a data collection method for biomolecular microarrays permitting the automatic collection of fluorescence data from biomolecular arrays without tedious human labor.

**Claims**

1. A biomolecular microarray substrate having a spot for fixing a biomolecular probe on a surface thereof, wherein a spot of light-reflecting layer is present between the biomolecular probe-fixing spot and the substrate surface.

2. The substrate according to claim 1 wherein multiple biomolecular probe-fixing spots are present.

3. The substrate according to claim 1 or 2 wherein the light-reflecting layer spots have essentially the same planar shape as the biomolecular probe-fixing spots.

4. The substrate according to any of claims 1 to 3 wherein the biomolecular probe-fixing spots are comprised of at least one biomolecular probe-fixing compound selected from among the group consisting of biotin; avidin; streptoavidin; poly-L-lysine; and compounds containing an amino group, aldehyde group, thiol group, carboxyl group, succinimide group, maleimide group, epoxide group, or isothiocyanate group.

5. The substrate according to any of claims 1 to 4 wherein the biomolecular probe-fixing spots are round and have a diameter ranging from 10 to 500 micrometers, or are square with a lateral length ranging from 10 to 500 micrometers.

6. The substrate according to any of claims 1 to 5 wherein said light-reflecting layer is a metal layer.

7. The substrate according to any of claims 1 to 6 wherein the substrate is a glass substrate, silicon substrate, or silica substrate.

8. The substrate according to any of claims 1 to 7 wherein a water-repellent layer is present on the substrate surface which is not covered by the biomolecular probe-fixing spots.

9. A method of manufacturing the biomolecular microarray substrate according to any of claims 1 to 7, comprising the steps of:

   providing a light-reflecting layer on a substrate surface;
   providing a biomolecular probe-fixing layer on the light-reflecting layer;
   providing a photoresist layer on the biomolecular probe-fixing layer;
   exposing the photoresist layer through a spot-forming mask;
   developing the photoresist layer;
   etching the portion of the light-reflecting layer which is not protected by the photoresist layer to form spots of the biomolecular spot-fixing layer and the light-reflecting layer; and
   removing the photoresist layer.

10. The method of manufacturing according to claim 9 further comprising a step of water-resistant treatment of the substrate surface between the etching step and the photoresist removal step.

11. The method of manufacturing according to claim 9 or 10 wherein the biomolecular probe-fixing layer is formed by fixing a biomolecular probe-fixing compound after treating the surface of the light-reflecting layer with aminosilane.

12. The method of manufacturing according to claim 11 wherein the light-reflecting layer is an aluminum layer and the surface of the aluminum layer is oxidized with ethanol to form an aminosilane-treated light-reflecting layer.

13. The method of manufacturing of any of claims 9 to 12 wherein the light-reflecting layer is formed by the vapor deposition of a metal.

14. A biomolecular microarray having a biomolecular probe-fixing spot in which a biomolecular probe is fixed by a biomolecular probe-fixing spot having the biomolecular microarray substrate according to any of claims 1 to 8.

15. The biomolecular microarray according to claim 14 wherein multiple biomolecular probe-fixing spots are present.

16. The biomolecular microarray according to claim 14 or 15 wherein the biomolecular probe that is fixed is DNA, cDNA, RNA, or PNA.

17. The biomolecular microarray according to claim 16 wherein said fixed biomolecular probes have identical or different base sequences in individual biomolecular probe-fixing spots.

18. The biomolecular microarray according to claim 14 or 15 wherein the biomolecular probe that is fixed is a protein or a peptide.

19. The biomolecular microarray according to claim 18 wherein said fixed biomolecular probes have identical or different amino acid sequences in individual biomolecular probe-fixing spots.

**20.** A data collection method for biomolecular arrays comprising:

    interacting fluorescently labeled target biomolecules with a biomolecular microarray having, on a substrate surface, biomolecular probe-fixing spots that fix biomolecular probes on light-reflecting layer spots;
    directing excitation light onto the biomolecular microarray obtained and simultaneously measuring reflected light and fluorescence from the biomolecular microarray;
    specifying a biomolecular probe-fixing spot present on a light-reflecting layer spot from differences in the intensity of the light reflecting off of the biomolecular microarray; and
    obtaining fluorescence data from within the scope of the specified spot.

**21.** The method according to claim 20 wherein said biomolecular microarray has multiple biomolecular probe-fixing spots.

**22.** A data collection method for biomolecular arrays comprising:

    interacting fluorescently labeled target biomolecules with a biomolecular microarray having, on a substrate surface, biomolecular probe-fixing spots that fix biomolecular probes on light-reflecting layer spots;
    directing light onto the biomolecular microarray obtained and measuring reflected light from the biomolecular microarray;
    specifying a biomolecular probe-fixing spot having a light-reflecting layer spot from differences in the intensity of the light reflecting off of the biomolecular microarray;
    directing excitation light only onto the scope of the specified biomolecular probe-fixing spot and measuring the fluorescence; and
    obtaining fluorescence data from the scope of the specified spot.

**23.** The method according to claim 22 wherein the biomolecular microarray has multiple biomolecular probe-fixing spots.

**24.** The method according to any of claims 20 to 23 wherein the scope of the specified spot is detected by the difference in reflectance between a light-reflecting layer spot on the biomolecular microarray and the remainder of the surface of the biomolecular microarray.

**25.** The method according to any of claims 20 to 24 wherein the light-reflecting layer spots have essentially the same planar shape as the biomolecular probe-fixing spots.

**26.** The method according to any of claims 20 to 25 wherein the light or excitation light directed onto the biomolecular probe-fixing spots is a laser beam.

**27.** The method according to any of claims 20 to 26 wherein the target biomolecule is DNA, RNA, cDNA, mRNA, or a protein.

**28.** The method of any of claims 20 to 27 wherein the fluorescence data from just the scope of the specified spot is obtained as the integrated value, average value, or median value within the scopes of spots of fluorescent intensity.

**29.** The method according to claim 28 wherein the fluorescence data from just the scope of the specified spot is obtained for individual wavelengths of fluorescence as the integrated value, average value, or median value within the scopes of spots of fluorescent intensity.

**30.** The method according to any of claims 20 to 29 wherein fluorescence data is collected sequentially for each spot on the biomolecular microarray.

**31.** The method according to any of claims 20 to 30 wherein the scopes of multiple spots on the biomolecular microarray are specified, the fluorescence emitted by each spot, the scope of which has been specified, is sequentially measured, and using the data of the scopes of spots that have been specified in advance, fluorescence data from just the scopes of those spots is continuously collected.

**32.** The method according to claim 31 wherein the biomolecular probe-fixing spots of some portion of the biomolecular microarray are specified, the positions of all of the biomolecular probe-fixing spots are computed from the positions of the specified portion of spots, and the scopes of the spots are specified.

**33.** The method according to claim 31 wherein the scopes of all spots on the biomolecular microarray are specified in advance.

Fig.1

Fig.2

Fig. 3

Fig. 4

Fig. 5

PIXEL

REFLECTANCE DATA

FLUORESCENT Cy3 DATA

FLUORESCENT Cy5 DATA

IDENTIFICATION OF
DNA SPOT POSITION
(AUTOGRIDDING)

•EACH DNA SPOT IS IDENTIFIED
WITH A CERTAIN THRESHOLD VALUE

REFLECTANCE AND FLUORESCENCE WERE MEASURED SIMULTANEOUSLY.
REFLECTANCE AND FLUORESCENCE DATA PRESENT ON ONE PIXEL COORDINATE.

EP 1 457 782 A1

PRELIMINARY MEASUREMENT FOR TEST
(SPOT DIAMETER $r_l < r_s$ IS UNCHANGED.  SCANNING OF
SLIDE GLASS IS MADE IN CONTINUOUS MEASUREMENT
MODE TO DETERMINE SPOT POSITIONS.)

A

B

PRELIMINARY MEASUREMENT OF PARTS  A AND B
(REFLECTANCE INTENSITY OF MIRROR)

DATA  A

DATA  B

SELECTION OF CENTER

PRELIMINARY MEASUREMENT
INPUT OF ARRAY SPOTS → DIGITAL MEASUREMENT OF EACH SPOT

17

EP 1 457 782 A1

PIXEL

OBTAINING REFLECTANCE
DATA BY CONTINUOUS SCAN

IDENTIFICATION OF
DNA SPOT POSITION
(AUTOGRIDDING)

·EACH DNA SPOT IS IDENTIFIED
WITH A CERTAIN THRESHOLD VALUE.

→MEASUREMENT OF SPOT POSITION
(DETERMINATION OF CENTER COORDINATE
AND RADIUS)

SPOT IRRADIATION AREA

DIGITAL SCAN
FULUORESCENCE
MEASUREMENT

MOVING SLIDE GLASS TO SPOT IRRADIATION AREA

Fig. 6

## INTERNATIONAL SEARCH REPORT

| | International application No. |
|---|---|
| | PCT/JP02/12157 |

| | |
|---|---|
| A. CLASSIFICATION OF SUBJECT MATTER | |
| Int.Cl$^7$ G01N33/53, G01N37/00, G01N21/64 | |

According to International Patent Classification (IPC) or to both national classification and IPC

| B. FIELDS SEARCHED |
|---|
| Minimum documentation searched (classification system followed by classification symbols) |
| Int.Cl$^7$ G01N33/53, G01N37/00, G01N21/64 |

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2001-238674 A (Nikon Corp.),<br>04 September, 2001 (04.09.01),<br>Claims; mode for carrying out the Invention;<br>particularly, Par. Nos. [0048], [0049], [0079],<br>[0080]<br>(Family: none) | 1-7,9,11-33<br>8,10 |
| Y | JP 2000-342264 A (Hitachi, Ltd.),<br>12 December, 2000 (12.12.00),<br>Par. No. [0026]<br>(Family: none) | 8,10 |
| Y | JP 11-187900 A (Canon Inc.),<br>13 July, 1999 (13.07.99),<br>Par. No. [0070]<br>& EP 895082 A            & US 6476215 A | 8,10 |

| ☐ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>23 January, 2003 (23.01.03) | Date of mailing of the international search report<br>04 February, 2003 (04.02.03) |
| Name and mailing address of the ISA/<br>Japanese Patent Office | Authorized officer |
| Facsimile No. | Telephone No. |

Form PCT/ISA/210 (second sheet) (July 1998)